# EUROPÄISCHE PATENTSCHRIFT

(11) **EP 2 928 797 B1**
(45) Veröffentlichungstag und Bekanntmachung des Hinweises auf die Patenterteilung: **26.02.2020**
(21) Anmeldenummer: 13798572.7
(22) Anmeldetag: 16.11.2013
(51) Int. Cl.: B65G 47/86

(54) **SPIELFREIE SCHNAPPLAGERUNG FÜR GREIFER**
PLAY-FREE SNAP BEARING FOR GRIPPERS
MONTAGE PAR ENCLIQUETAGE SANS JEU POUR ÉLÉMENT DE PRÉHENSION

(30) Priorität: 04.12.2012 DE 102012111763
(43) Veröffentlichungstag der Anmeldung: 14.10.2015
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2013/003460
(87) Internationale Veröffentlichungsnummer: WO 2014/086460

(56) Entgegenhaltungen:
- EP-A2- 2 295 352
- DE-A1-102008 055 620
- DE-U1-202006 004 641

## Beschreibung

Die Erfindung betrifft eine Vorrichtung zum Greifen und Halten von Behältern, insbesondere von Flaschen, bevorzugt von PET-Flaschen in einer Behälterbehandlungsanlage mit einem an einem Transportelement befestigbaren Tragkörper, welcher schwenkbare, federbelastete Greifarme aufweist, wobei der Tragkörper Rastelemente aufweist, welche in dazu korrespondierenden Gegenrastelementen des Transportelements verrastbar sind, wobei der Tragkörper formschlüssig und durch die Biegespannung der Federarme zusätzlich kraftschlüssig mit den Transportelement verrastbar ist, wobei die Rastelemente als Federstege ausgeführt sind.

Behälterbehandlungsanlagen sind in unterschiedlichen Ausführungen, z.B. als Füllmaschinen, Etikettiermaschinen, Inspektionsmaschinen oder Rinser bekannt. Eingangs genannte Behälter können beispielsweise als Flaschen für Flüssigkeiten, beispielsweise für Getränke verwendet werden. Die Behälter z.B. Flaschen können aus einem transparenten oder transluzenten Material, beispielsweise aus Glas oder aus einem transluzenten Kunststoff, z.B. PET bestehen. Denkbar ist aber auch, dass die Behälter aus anderen Materialien bestehen und mit anderen Füllgütern befüllbar sind.

Beispielsweise bei Füllmaschinen gibt es eine Fülle von Lösungen, die Flaschen auf ihrem Weg durch die Anlage zu führen und zu halten. Dabei müssen die Flaschen zum Teil gewendet werden, in jedem Falle aber sicher geführt und ergriffen werden. Die DE 297 13 510 U zeigt einen derartigen Greifer beispielsweise bei einem Rotationsförderer, bei dem an einer Tragplatte schwenkbar gelagerte Greifarme vorgesehen sind, die zwischen ihren den Greifbacken gegenüberliegenden anderen Enden eine Druckfeder aufweisen, die diese Greifarme in Schließstellung zwingt. Die Flaschen können dabei über Eintrittsschräger an den Vorderseiten der Greifarme unter Zusammendrücken der Feder eingeschoben und umgekehrt wieder ausgezogen werden. Eine weitere Vorrichtung zum Greifen von PET-Flaschen nach dem Oberbegriff des Anspruchs 1 ist aus der DE 10 2008 055 620 A1 bekannt.

In der EP 2 279 143 A1 wird eine Greif- und Haltevorrichtung vorgeschlagen, deren Greifarme kostengünstig, einfach und sogar werkzeuglos auswechselbar sind. Dies wird vorteilhaft erreicht, indem zwischen Lagerenden der Greifarme ein Fixierelement positioniert ist, wobei die Lagerenden eine Randausnehmung aufweisen. Durch Verdrehen der Greifarme in eine extreme Öffnungslage und vorherigem Entspannen der Feder werden die Greifarme aus der Fixierung gelöst, so dass diese leicht und werkzeuglos abnehmbar sind. Die EP 2 279 143 A1 offenbart weiter, dass der Tragkörper zum Befestigen an dem Transportelement verformbare Montagelaschen aus einem elastischen Material aufweist, wobei die Montagelaschen eine klemmende Anlage an Fixierelementen des Transportelementes bewirken. Die Fixierelemente weisen Tellerköpfe oder Beilegscheiben auf, welche die verformbaren Montagelaschen am Ausfallen hindern.

Ausgehend von dem vorbekannten Stand der Technik liegt der Erfindung die Aufgabe zugrunde, eine Vorrichtung zum Greifen und Halten bereitzustellen welche in ihrer Gesamtheit leicht und werkzeuglos montierbar, aber auch demontierbar ist, wobei zudem ein sicherer Halt insbesondere im Montagezustand auch bei Schwingungen oder dergleichen schädlichen Einflüssen gewährleistet sein soll.

Erfindungsgemäß wird die Aufgabe durch eine Vorrichtung zum Greifen und Halten von Behältern mit den Merkmalen des Anspruchs 1 gelöst, wobei die Rastelemente L-förmig mit einem Quersteg und einem winklig daran angeordneten Hochsteg ausgeführt sind und mit ihrem Quersteg an einer Drehaufnahme zur Aufnahme von Drehzapfen der schwenkbaren Greifarme angeordnet sind, wobei sich der Hochsteg in Richtung zu einem Kopfbereich der Drehaufnahme erstreckt und dabei mit seinem Kopfteil in Richtung zum Kopfbereich der Drehaufnahme orientiert ist.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Eine kraftschlüssige Verbindung im Sinne der Erfindung ist eine Verbindung, bei welcher die Fügepartner sowohl in Fügerichtung als auch entgegen der Fügerichtung zerstörungsfrei getrennt werden können, wobei die Fügepartner ohne weitere Maßnahmen aneinander liegen. Eine Klemmverbindung ist als solche kraftschlüssige Verbindung anzusehen. Eine formschlüssige Verbindung im Sinne der Erfindung ist eine Verbindung, bei welcher die Fügepartner sowohl in Fügerichtung als auch entgegen der Fügerichtung nicht zerstörungsfrei getrennt werden können, wobei die Fügepartner mit weiteren Maßnahmen aneinander gehalten werden. Eine Nietverbindung ist als solche formschlüssige Verbindung anzusehen, wobei zum Lösen der Verbindung der Niet zerstört werden muss. Eine kraftformschlüssige Verbindung ist im Sinne der Erfindung eine Verbindung bei welcher die Fügepartner bei einer gewollten Einleitung einer Lösekraft entgegen der Fügerichtung auch mehrmals zerstörungsfrei voneinander trennbar sind, ohne dass die weitere Maßnahme zum Aufrechterhalten der Verbindung zerstört wird, wobei die Fügepartner mittels der weiteren Maßnahme in Fügerichtung erneut auch mehrmals miteinander verbindbar sind.

Mit der Erfindung ist der Tragkörper lagesicher mit dem Tragelement verbindbar, wobei ein werkzeugloser Austausch der Gesamteinheit, also des Tragkörpers mit daran angeordneten Elementen, wie z.B. beider Greifarme in einem Schritt ausführbar ist. Die Vorrichtung zum Greifen und Halten kann so in ihrer Gesamtheit vormontiert und so in einem Stück an die erforderlichen Bedingungen (Flaschendimension usw.) angepasst an dem Transportelement montiert werden. Zur Demontage und Montage der Greifarme wird auf die EP 2 279 143 A1 verwiesen.

Erfindungsgemäß weist der Tragkörper als Federstege ausgeführte Rastelemente auf, wobei das Transportelement bevorzugt dazu korrespondierende Rastöffnungen als Gegenrastelemente aufweist. So kann der Tragkörper einfach kraftformschlüssig mit dem Tragelement verrastet werden, so dass die kraftformschlüssige Verbindung mittels der Rastpartner gebildet werden kann.

Weiterhin erfindungsgemäß sind als Rastelemente mehrere, bevorzugt zwei Federstege vorgesehen, welche an einer Drehaufnahme der Vorrichtung angeordnet und zudem bevorzugt einander gegenüberliegend angeordnet sind, wobei die Federstege erfindungsgemäß L-förmig mit einem Quersteg und einen sich winklig davon wegerstreckenden Hochsteg ausgeführt sind. Der Hochsteg erstreckt sich bevorzugt in Richtung zu einem Kopfteil in Richtung zur Drehaufnahme orientiert, wobei der Hochsteg bevorzugt in einem spitzen Winkel (kleiner oder gleich 90°) zum Quersteg angeordnet ist. Die Drehaufnahme dient zur Aufnahme der Drehzapfen der Greifarme, wobei auch diesbezüglich auf die EP 2 279 143 A1 verwiesen wird.

Zielführend ist, wenn das Rastelement an seinem Kopfteil Überstände aufweist, welche den Hochsteg jeweils seitlich überragen.

Besonders zweckmäßig ist, wenn die Gegenrastelemente jeweils als Rastöffnung ausgeführt sind, welche korrespondierend zu den Rastelementen, also zu den Federstegen ausgeführt sind. Zielführend ist dabei, dass die Rastöffnungen zwei in ihrer Breite unterschiedlich ausgeführte Teilöffnungen aufweisen, welche direkt ineinander übergehen, also aneinander anschließen. Eine erste Teilöffnung ist in ihrer Breite an die Breite des Kopfteils mit seinen seitlichen Überständen angepasst, wobei die zweite Teilöffnung schmaler als die erste Teilöffnung ausgeführt und an die Breite des Hochstegs angepasst ist. Selbstverständlich ist die Anzahl an Gegenrastelementen in dem Transportelement an die Anzahl der Rastelemente angepasst. Insofern sind bei zwei Rastelementen auch zwei Gegenrastelemente vorgesehen.

Die Gegenrastelemente sind bevorzugt an dem Transportelement angeordnet und bezogen auf eine Spiegelachse spiegelbildlich angeordnet, so dass die jeweils ersten Teilöffnungen zur Spiegelachse orientiert sind. Zwischen den beiden Öffnungen, welche bezogen auf die Spiegelachse gegenüberliegend angeordnet sind, sind vorteilhaft Aufnahmeöffnungen für die Drehaufnahmen angeordnet, wobei die Spiegelachse als Mittelachse der Aufnahmeöffnungen bezeichnet werden kann.

Die Ausgestaltung und Anordnung der Gegenrastelemente, also der Rastöffnungen ist an die Federwirkung der Rastelemente angepasst. Das bedeutet, dass die Rastelemente mit ihrem Kopfteil zusammengedrückt durch die erste, größere Teilöffnung geführt werden und dabei in Richtung zur Drehaufnahme ausgelenkt und so (weiter) vorgespannt werden. Ist das Kopfteil vollständig durch die erste, größere Teilöffnung geführt, gelangt der Hochsteg federkraftbedingt in Richtung zu seiner Ausgangslage, wobei sich der Hochsteg quasi entspannt, bevorzugt teilentspannt. Dabei legen sich die Überstände des Kopfteils auf die, die Teilöffnung begrenzende Oberfläche auf, was aufgrund der wirkenden Biegekraft des Federsteges ersichtlich ist. Die Hochstege gelangen in die zweite, kleinere, also schmalere Teilöffnung, wobei die Überstände der Kopfteile auf den entsprechenden, begrenzenden Oberflächenbereichen der zweiten, kleineren Teilöffnung aufliegen und so in ihrer Bewegungsenergie gedämpft in Richtung zu der, die zweite, kleinere Teilöffnung begrenzenden Stirnwand bewegt werden. So ist sichergestellt, dass genügend Spielraum zum Nachjustieren vorhanden. So kann eine spielfreie Lagerung gewährleistet werden, bei welcher die Rastelemente in einem gewissen Bereich, nämlich zumindest innerhalb der zweiten, kleineren Teilöffnung verfahren werden können, in welchem diese genügend Raum haben um sicher aufliegen zu können. Günstiger Weise sind die Rastöffnungen so ausgeführt, dass sich die Hochstege nicht vollständig entspannen, so dass die Hochstege federkraftbedingt, also zwangsweise in Richtung zur Wandung, also in Richtung zur Stirnwand der zweiten Teilöffnung gedrückt werden und in dieser Lage verbleiben. Dabei muss nicht unbedingt eine Anlage eines der Hochstege an der entsprechenden Stirnwand oder eine Anlage beider Hochstege an der betreffenden Stirnwand vorliegen.

Sinnvoll ist dabei, dass die Überstände im Bereich der zweiten, kleineren also schmaleren Teilöffnung über dieselbe seitlich überstehen, und so eine Auszugssicherung aus der zweiten Teilöffnung bilden. Mit anderen Worten ist der Hochsteg zum einen federkraftbedingt und zum anderen durch Anlage der Überstände an dem Transportelement in der zweiten kleineren Teilöffnung verharrend lagesicher, d.h. im Wesentlichen formschlüssig, gehalten.

Vorteilhaft ist, dass die Rastelemente zum Lösen der Rastverbindung an ihren Kopfteilen gezielt kraftangreifend entgegen der Federkraft in Richtung zur Drehaufnahme ausgelenkt werden müssen um die Kopfteile in den Bereich der ersten, größeren Teilöffnung zu bewegen, so dass die jeweiligen Kopfteile entgegen der Fügerichtung aus der Rastöffnung herausführbar sind.

Das Transportelement kann als Kreissegmentelement ausgeführt sein, welches mit seinem Befestigungsende an einer Welle der Behälterbehandlungsmaschine befestigbar ist, so dass ein Rotationsförderer gebildet ist. Dabei kann jedem Tragkörper bevorzugt jeweils ein Transportelement zugeordnet sein. Üblich ist es t aber auch, mehrere Tragkörper an einem Kreissegmentelement zu montieren, welches als Halbkreisausschnitt, als Viertelkreisausschnitt, als Achtelkreisausschnitt oder als Sechzehntel Kreisausschnitt oder noch kleiner ausführbar ist, so dass auch mehrere Tragkörper an einem Kreissegmentelement befestigbar sind.
Die Kreissegmentelemente können mit einem Hutelement und einer zentralen Schraube mit einer Welle verbindbar sein. In bevorzugter Ausgestaltung kann vorgesehen sein, das Transportelement als einstückiges Scheibenelement auszuführen, an welchem die Gegenrastelemente angeordnet sind, die mit den Rastelementen der Tragkörper in Eingriff bringbar sind. Das Scheibenelement kann eine zentrale, mittige Öffnung aufweisen, durch welche ein Verbindungselement führbar ist, und die notwendige Verbindung zur Welle herstellt. Möglich ist auch ein Hutelement vorzusehen, welches sich an dem Scheibenelement anlegt, wobei das Hutelement mit dem Verbindungselement zusammen die notwendige, drehsichere Verbindung des Scheibenelementes zur Welle herstellt. Insgesamt ist also bevorzugt ein Rotationsförderer, also Sterntransporteur gebildet, welcher mehrere Tragkörper mit daran angeordneten Greifarmen aufweist.

Mit der Erfindung wird bei dem Einsetzen des Tragkörpers in dem Transportelement eine kraftformschlüssige Verbindung erreicht, wobei zugleich zur Rastverbindung eine Vorspannung erreicht wird, welche Vorspannung die Haltekraft vergrößert und ein Spiel zwischen den Verbindungspartnern vermeidet. Ein Spiel zwischen den Verbindungspartnern stellt sich vorteilhaft auch bei Belastungen oder Schwingungen nicht ein. Der Tragkörper ist bevorzugt aus einem Kunststoff gebildet, und ist somit schnell sowie in seiner Gesamtheit werkzeuglos austauschbar. Dies ist nicht nur bei einem Wechsel auf andere Flaschendimensionen vorteilhaft, sondern auch bei einem Crash, da durch die schnelle und einfache Demontage und Montage eine schnelle Schadensbehebung erreichbar ist, ohne dass besonders geschultes Personal mit speziellem Werkzeug heranzuziehen ist, da ja einfach die Kopfteile kraftgeführt aus ihrer lagesicheren Position in die freigebende Position in den Bereich der ersten Teilöffnung geführt werden müssen. Zudem ist vorteilhaft, dass die Tragkörper mit den zugehörigen Elementen in offener Konstruktion bei wenigen Bauelementen leicht und einfach zu reinigen sind, wobei der Tragkörper und/oder seine Elemente als schwächstes Glied ausgeführt sind, und bei Überlast zerstört werden, was aber aufgrund der leichten und schnellen Austauschmöglichkeit vorteilhaft und gewollt ist, im Sinne einer Sollbruchstelle.

Die Erfindung wird im Folgenden anhand der Figuren an einem Ausführungsbeispiel näher erläutert. Es zeigen:
Fig. 1 eine Vorrichtung zum Greifen und Halten, welche mit einem Transportelement verbunden ist, in einem Längsschnitt,
Fig. 2 die Vorrichtung aus Figur 1 in einem von dem Transportelement getrennten Zustand,
Fig. 3 die Vorrichtung aus Figur 2 in einem ersten Zwischenverbindungsschritt (Einsetzen), und
Fig. 4a-c die Vorrichtung aus Figur 1 in drei Ansichten im eingesetzten (verbundenen) Zustand und zusätzlich vergrößert.

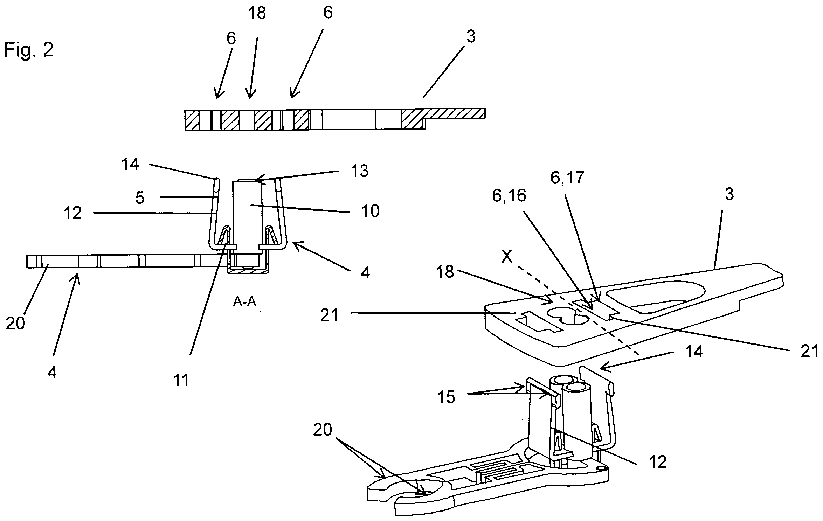

In den unterschiedlichen Figuren sind gleiche Teile stets mit denselben Bezugszeichen versehen, weswegen diese in der Regel auch nur einmal beschrieben werden. In den Figuren 2 bis 4 sind unterschiedliche Ansichten und zwar Schnittdarstellung und perspektivische Ansichten dargestellt.

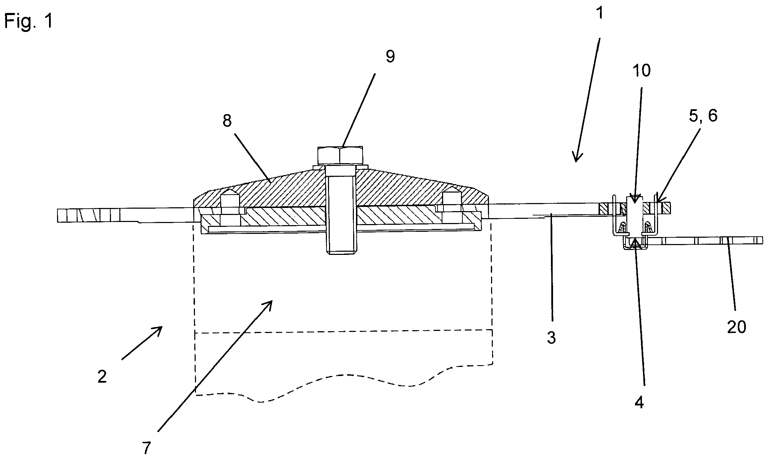

Figur 1 zeigt eine Vorrichtung 1 zum Greifen und Halten von Behältern, insbesondere von Flaschen, bevorzugt von PET-Flaschen in einer Behälterbehandlungsanlage 2 mit an einem Transportelement 3 befestigbaren Tragkörper 4 mit daran schwenkbaren, federbelasteten Greifarmen 20. Der Tragkörper 4 weist Rastelemente 5 und das Transportelement 3 dazu korrespondierende Gegenrastelemente 6 auf, so dass der Tragkörper 4 kraftformschlüssig mit dem Tragelement 3 verbindbar ist.

Die Behälterbehandlungsanlage 2 kann zum Beispiel als Füllmaschine ausgeführt seien, von der lediglich eine Welle 7 erkennbar ist. Mit der Welle 7 ist das Transportelement 3 verbindbar. Das Transportelement 3 ist wie in den Figuren 2 bis 4 erkennbar als Kreissegmentelement ausführbar, wobei jedes der Kreissegmente mit der Welle 7 verbindbar ist.

Dazu wird ein Hutelement 8 verwendet welches mit der Welle 7 über eine Schraube 9 verbindbar ist, so dass die Transportelemente 3 lagesicher gehalten sind, und so, dass quasi ein Sterntransporteur gebildet ist. In bevorzugter Ausgestaltung ist vorgesehen ein einziges Transportelement 3 als Kreisscheibe auszuführen, welche mit der Welle 7 gegebenenfalls mittels des Hutelementes 8 über die Schraube 9 verbindbar ist. Natürlich sind auch andere Befestigungsmöglichkeiten denkbar und auch das Sternrad oder der Sterntransporteur kann natürlich auch eine andere Struktur haben, zum Beispiel eine offene Struktur mit speichenartigen Tragelementen aufweisen.

In Figur 2 ist zu erkennen, dass der Tragkörper 4 als Federstege 5 ausgeführte Rastelemente 5 aufweist, wobei das Transportelement 3 dazu korrespondierende Rastöffnungen 6 als Gegenrastelemente 6 aufweist.

Als Rastelemente 5 sind an dem Tragkörper 4 mehrere, wie beispielhaft dargestellt zwei Federstege 5 vorgesehen, welche einander gegenüberliegend an einer Drehaufnahme 10 angeordnet sind.

Die Federstege 5 sind L-förmig mit einem Quersteg 11 und einen sich winklig davon wegerstreckenden Hochsteg 12 ausgeführt. Der Hochsteg 12 erstreckt sich in Richtung zu einem Kopfbereich 13 der Drehaufnahme 10 und ist dabei mit seinem Kopfteil 14 in Richtung zur Drehaufnahme 10 orientiert, wobei der Hochsteg 12 beispielhaft in einem spitzen Winkel α (kleiner oder gleich 90°) zum Quersteg 11 angeordnet ist. Der in Figur 2 gezeigte Zustand, zeigt die zusammengedrückte Position, wobei sich der Winkel aus der Druckkraft ergibt. Im gespannten (eingesetzten) Zustand ist der Winkel der Hochstege 12 zu den Querstegen 11 von zentraler Bedeutung, wie nachstehend ausgeführt.

Erkennbar ist, dass das Rastelement 5 an seinem Kopfteil 14 Überstände 15 aufweist, welche den Hochsteg 12 jeweils seitlich überragen.

Da die Rastelemente 5 als Federstege ausgeführt sind, sind die Gegenrastelemente 6 jeweils als Rastöffnung 6 korrespondierend zu den Federstegen 5 ausgeführt. Die Rastöffnungen 6 weisen zwei in ihrer Breite unterschiedlich ausgeführte Teilöffnungen 16 und 17 auf, welche direkt ineinander übergehen, also aneinander anschließen. Eine erste Teilöffnung 16 ist in ihrer Breite an die Breite des Kopfteils 14 mit seinen seitlichen Überständen 15 angepasst, wobei die zweite Teilöffnung 17 schmaler als die erste Teilöffnung 16 ausgeführt und an die Breite des Hochstegs 12 angepasst ist.

Die Gegenrastelemente 6 sind an dem Transportelement 3 angeordnet und bezogen auf eine Spiegelachse X spiegelbildlich angeordnet, so dass die jeweils ersten Teilöffnungen 16 zur Spiegelachse X orientiert sind. Zwischen den beiden Rastöffnungen 6, welche auf die Spiegelachse X gegenüberliegend angeordnet sind, sind vorteilhaft Aufnahmeöffnungen 18 für die Drehaufnahmen 10 angeordnet, wobei die Spiegelachse X als Mittelachse der Aufnahmeöffnungen 18 bezeichnet werden kann.

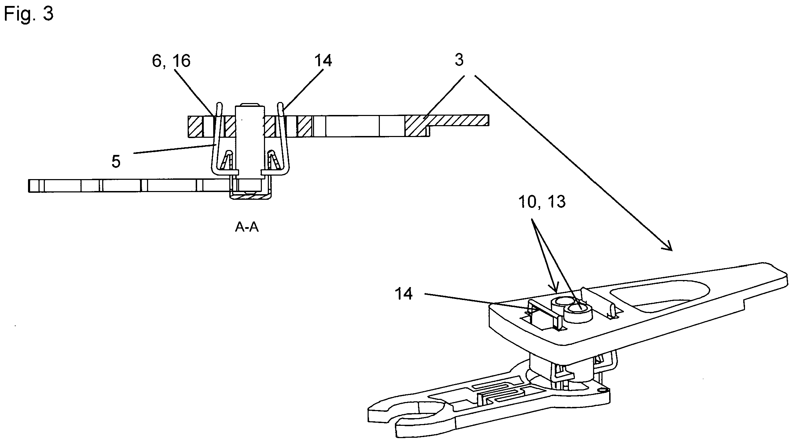

Die Ausgestaltung und Anordnung der Gegenrastelemente 6, also der Rastöffnungen 6 ist an die Federwirkung der Rastelemente 5 angepasst. Das bedeutet, dass die Rastelemente 5 mit ihrem Kopfteil 14 zusammengedrückt durch die erste größere Teilöffnung 16 geführt werden und dabei in Richtung zur Drehaufnahme 10 ausgelenkt und so vorgespannt werden (Figur 3).

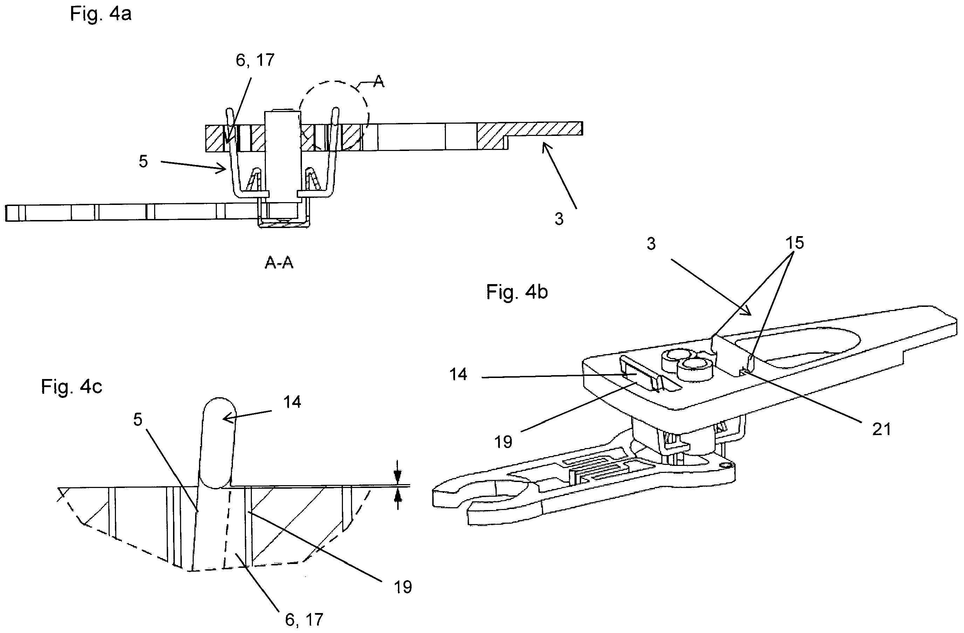

Ist das Kopfteil 14 vollständig durch die erste, größere Teilöffnung 16 geführt, gelangt der Hochsteg 12 federkraftbedingt in Richtung zu seiner Ausgangslage, wobei sich der Hochsteg 12 zumindest teilentspannt. Dabei legen sich die Überstände 15 der Kopfteile 14 auf der, die Teilöffnung 17 begrenzende Oberfläche, also auf die begrenzenden Oberflächenbereiche 21 auf, was aufgrund der wirkenden Biegekraft des Federsteges 5 ersichtlich ist (Figur 4). Die Hochstege 12 gelangen in die zweite, kleinere, also schmalere Teilöffnung 17, wobei die Überstände 15 des Kopfteils 14 auf den entsprechenden, begrenzenden Oberflächenbereichen 21 der zweiten, kleineren Teilöffnung 17 aufliegen und so in ihrer Bewegungsenergie gedämpft in Richtung zu der, die zweite, kleinere Teilöffnung 17 begrenzenden Wandung 19, also Stirnwand 19 bewegt werden. So ist sichergestellt, dass genügend Spielraum zum Nachjustieren vorhanden. So kann eine spielfreie Lagerung gewährleistet werden, bei welcher die Rastelemente 5 in einem gewissen Bereich, nämlich zumindest innerhalb der zweiten, kleineren Teilöffnung 17 verfahren werden können, in welchem diese genügend Raum haben um sicher aufliegen zu können.

Die Rastöffnungen 6 sind so ausgeführt, dass sich die Hochstege 12 nicht vollständig entspannen, so dass die Hochstege 12 federkraftbedingt, also zwangsweise in Richtung zur Wandung 19, also in Richtung zur Stirnwand 19 der zweiten Teilöffnung 17 gedrückt werden und in dieser Lage verbleiben und so eine Zugkraft aufbauen, die den Tragkörper 4 in Richtung des Transportelementes 3 zieht bzw. an dessen Unterseite andrückt. Dabei muss nicht unbedingt eine Anlage eines der Hochstege 12 an der entsprechenden Stirnwand 19 oder eine Anlage beider Hochstege 12 an der betreffenden Stirnwand 19 vorliegen.

Erkennbar ist dabei, dass die Überstände 15 im Bereich der zweiten, kleineren also schmaleren Teilöffnung 17 über dieselbe seitlich überstehen, und so eine Auszugssicherung aus der zweiten Teilöffnung 17 bilden (Figur 4). Mit anderen Worten ist der Hochsteg 12 zum einen federkraftbedingt und zum anderen durch Anlage der Überstände 15 an dem Transportelement 3 in der zweiten kleineren Teilöffnung 17 verharrend lagesicher gehalten.

Wie zu erkennen ist, sind die Rastelemente 5 zum Lösen der Rastverbindung an ihren Kopfteilen 14 gezielt kraftangreifend entgegen der Federkraft in Richtung zur Drehaufnahme 10 auszulenken um die Kopfteile 14 in den Bereich der ersten, größeren Teilöffnung 16 zu bewegen, so dass die jeweiligen Kopfteile 14 entgegen der Fügerichtung aus der Rastöffnung 5 herausführbar sind.

Der Tragkörper 4 ist beispielhaft aus einem Kunststoff gebildet, wobei das Transportelement aus einem Metall gebildet werden kann. Die weiteren Elemente der Greif- und Haltevorrichtung, wie zum Beispiel eine Greifarmfeder oder andere Bauelemente sind in den Figuren 1 bis 4a-c nicht dargestellt, um den erfindungsgemäße Gegenstand mit den Rast- und Gegenrastelementen deutlich darstellen zu können.

### Bezugszeichenliste

- 1: Vorrichtung zum Greifen und Halten
- 2: Behälterbehandlungsanlage
- 3: Transportelement
- 4: Tragkörper
- 5: Rastelement/Federsteg
- 6: Gegenrastelement/Rastöffnung
- 7: Welle
- 8: Hutelement
- 9: Schraube
- 10: Drehaufnahme
- 11: Quersteg
- 12: Hochsteg
- 13: Kopfbereich von 10
- 14: Kopfteil
- 15: Überstände
- 16: Erste Teilöffnung von 6
- 17: Zweite Teilöffnung von 6
- 18: Aufnahmeöffnung
- 19: Wandung/Stirnwand
- 20: Greifarme
- 21: Begrenzende Oberflächenbereiche von 17

## Patentansprüche

1. Vorrichtung zum Greifen und Halten von Behältern in Behälterbehandlungsanlagen, mit einem an einem Transportelement (3) befestigbaren Tragkörper (4), welcher schwenkbare, federbelastete Greifarme (20) aufweist, wobei der Tragkörper (4) Rastelemente (5) aufweist, welche in dazu korrespondierenden Gegenrastelementen (6) des Transportelements (3) verrastbar sind, wobei der Tragkörper (4) formschlüssig und durch die Biegespannung der Federarme zusätzlich kraftschlüssig mit dem Transportelement (3) verrastbar ist, wobei die Rastelemente (5) als Federstege ausgeführt sind, **dadurch gekennzeichnet, dass** die Rastelemente (5) L-förmig mit einem Quersteg (11) und einem winklig daran angeordneten Hochsteg (12) ausgeführt sind und mit ihrem Quersteg (11) an einer Drehaufnahme (10) zur Aufnahme von Drehzapfen der schwenkbaren Greifarme (20) angeordnet sind, wobei sich der Hochsteg (12) in Richtung zu einem Kopfbereich (13) der Drehaufnahme (10) erstreckt und dabei mit seinem Kopfteil (14) in Richtung zum Kopfbereich (13) der Drehaufnahme (10) orientiert ist.

2. Vorrichtung nach Anspruch 1, **dadurch gekennzeichnet, dass** der winklig zu seinem Quersteg (11) angeordnete Hochsteg (12) des Rastelements (5) schräg verlaufend mit seinem Kopfteil (14) in Richtung zu dem Kopfbereich (13) der Drehaufnahme (10) orientiert ist.

3. Vorrichtung nach einem der vorhergehenden Ansprüche 1 oder 2, **dadurch gekennzeichnet, dass** das Rastelement (5) an seinem Kopfteil (14) Überstände (15) aufweist, wobei die Überstände (15) den Hochsteg (12) des Rastelementes (5) seitlich überragen.

4. Transportvorrichtung in Form eines Transporteurs oder einer Behälterbehandlungsmaschine, wie eine Füllmaschine, ein Rinser oder dergleichen, **dadurch gekennzeichnet, dass** diese eine Mehrzahl von Vorrichtungen zum Greifen und Halten von Behältern (1) gemäß einem der Ansprüche 1 bis 3 aufweist, und wobei diese Gegenrastelemente (6) aufweisen, in welchen die Rastelemente (5) der Tragkörper (4) verrastbar sind, insbesondere zwei Gegenrastelemente (6) pro Vorrichtung zum Greifen und Halten (1) des Tragkörpers (4), **dadurch gekennzeichnet, dass** die Gegenrastelemente (6) als Rastöffnungen ausgeführt sind, durch welche die Kopfbereiche (13, 14) der Hochstege (12) hindurchleitbar und dort verrastbar sind.

5. Transportvorrichtung nach Anspruch 4, **dadurch gekennzeichnet, dass** die Gegenrastelemente (6) zwei in ihrer Breite unterschiedlich ausgeführte, ineinander übergehende Teilöffnungen (16,17) aufweisen, wobei eine erste, größere Teilöffnung (16) an eine Breite eines Kopfteils (14) mit seinen Überständen (15) des Rastelementes (5) angepasst ist, wobei die zweite, schmalere Teilöffnung (17) an eine Breite eines Hochsteges (12) des Rastelementes (5) angepasst ist.

6. Transportvorrichtung nach einem der Ansprüche 4 und 5, **dadurch gekennzeichnet, dass** die als Rastöffnungen ausgeführten Gegenrastelemente (6) mindestens zwei Teilbereiche (16, 17) aufweisen, nämlich einen ersten größeren Teilbereich (16), durch welchen der Kopfbereich (13, 14) des Hochsteges (12) hindurchleitbar ist, und einen zweiten kleineren Teilbereich (17), in welchen der Hochsteg (12) in seiner Einbaulage hineinbewegbar ist und wobei die Kopfbereiche (13, 14) des Hochsteges (12) im Randbereich des kleineren Teilbereichs (17) auflegbar sind, und zwar auf der zur Anlagefläche des Tragkörpers (4) gegenüberliegenden Seite des Transportelementes (3).

7. Transportvorrichtung nach einem der Ansprüche 4 bis 6, **dadurch gekennzeichnet, dass** die Gegenrastelemente (6) an dem Transportelement (3) spiegelbildlich zueinander angeordnet sind.

8. Transportvorrichtung nach einem der Ansprüche 4 bis 7, **dadurch gekennzeichnet, dass** das Transportelement (3) als Kreissegmentelement ausgeführt ist.

9. Transportvorrichtung nach einem der Ansprüche 4 bis 7, **dadurch gekennzeichnet, dass** das Transportelement (3) als Kreisscheibenelement ausgeführt ist.

10. Transportvorrichtung nach einem der Ansprüche 4 bis 9, **dadurch gekennzeichnet, dass** eine Stirnwand (19) des Gegenrastelementes (6) derart entfernt liegt und das Gegenrastelement derart dimensioniert ist, dass der Hochsteg (12) in Richtung der Biegekraft in Einbaulage nicht an der Stirnwand (19) anschlägt.

11. Transportvorrichtung nach Anspruch 10, **dadurch gekennzeichnet, dass** die Stirnwand (19) von zwei sich gegenüberliegenden Gegenrastelementen (6) derart dimensioniert und/oder beabstandet sind, dass mindestens ein Hochsteg (12) in Richtung der Biegekraft in Einbaulage nicht an der zugeordneten Stirnwand (19) anschlägt.

## Claims

1. Device for gripping and holding containers in container treatment systems, comprising a gripper (4) which can be secured to a transport element (3), which comprises pivotable spring-loaded gripper arms (20), wherein the gripper (4) comprises catch elements (5), which can be engaged into corresponding counter-catch elements (6) of the transport element (3), wherein the gripper (4) can be locked with the transport element (3) in positive fit, and additionally by flexure tension of the spring arms in non-positive fit, wherein the catch elements (5) are configured as spring webs, **characterised in that** the catch elements (5) are configured as L-shaped, with a transverse web (11) and, arranged at an angle to it, an upright web (12), and with its transverse web (11) being arranged at a rotating receiver (10) for receiving rotating pins of the pivotable gripper arms (20), wherein the upright web (12) extends in the direction of a head region (13) of the rotating receiver (10), and in this situation is oriented with its head part (14) in the direction of the head region (13) of the rotating receiver (10).

2. Device according to claim 1, **characterised in that** the upright web (12) of the catch element (5), arranged at an angle to its transverse web (11) is oriented running obliquely with its head part (14) in the direction of the head region (13) of the rotating receiver (10).

3. Device according to any one of claims 1 or 2, **characterised in that** the catch element (5) comprises at its head part (14) projections (15), wherein the projections (15) project laterally from the upright web (12) of the catch element (5).

4. Transport device in the form of a transporter or a container treatment machine, such as a filling machine, a rinser, or the like, **characterised in that** this comprises a plurality of devices for gripping and holding of containers (1) in accordance with any one of claims 1 to 3, and wherein these comprise counter-catch elements (6), into which the catch elements (5) of the gripper (4) can engage, in particular two counter-catch elements (6) per device for gripping and holding (1) the gripper (4), **characterised in that** the counter-catch elements (6) are configured as catch openings, through which the head regions (13, 14) of the upright webs (12) can be introduced and locked there.

5. Transport device according to claim 4, **characterised in that** the counter-catch elements (6) comprise part openings (16, 17) of different widths and merging into one another, wherein a first, larger part opening (16) is adjusted to fit a width of a head part (14) with its projections (15) of the catch element (5), wherein the second, narrower part opening (17) is adjusted to fit a width of an upright web (12) of the catch element (5).

6. Transport device according to any one of claims 4 and 5, **characterised in that** the counter-catch elements (6), configured as catch openings, comprise at least two part regions (16, 17), namely a first, larger part region (16), through which the head region (13, 14) of the upright web (12) can be introduced, and a second, smaller part region (17), into which the upright web (12) can be moved in its installation position, and wherein the head regions (13, 14) of the upright web (12) can be laid in the peripheral region of the smaller part region (17), and specifically on the side of the transport element (3) which is opposite the contact surface of the gripper (4).

7. Transport device according to any one of claims 4 to 6, **characterised in that** the counter-catch elements (6) are arranged at the transport element (3) in a mirror-image arrangement to one another.

8. Transport device according to any one of claims 4 to 7, **characterised in that** the transport element (3) is configured as a circle segment element.

9. Transport device according to any one of claims 4 to 7, **characterised in that** the transport element (3) is configured as a circular disk element.

10. Transport device according to any one of claims 4 to 9, **characterised in that** a face wall (19) of the counter-catch element (6) lies at such a distance away, and the counter-catch element is dimensioned in such a way, that the upright web (12), in the direction of the flexure force, in the installed position, does not come in contact with the face wall (19).

11. Transport device according to claim 10, **characterised in that** the face walls (19) of two mutually-opposed counter-catch elements (6) are dimensioned in such a way, and/or are spaced apart from one another in such a way, that at least one upright web (12), in the direction of the flexure force, in the installed position, does not come in contact with the face wall (19) allocated to it.

## Revendications

1. Dispositif de préhension et de maintien de récipients dans des installations de traitement de récipients, avec un corps porteur (4) pouvant être fixé à un élément de transport (3) qui présente des bras de préhension (20) pivotants, sollicités par ressort, dans lequel le corps porteur (4) présente des éléments d'encliquetage (5) qui sont encliquetables dans des éléments d'encliquetage antagoniste (6) correspondants à ceux-ci de l'élément de transport (3), dans lequel le corps porteur (4) est encliquetable par complémentarité de forme et par la contrainte de flexion des bras de ressort en outre à force avec l'élément de transport (3), dans lequel les éléments d'encliquetage (5) sont réalisés comme nervures de ressort, **caractérisé en ce que** les éléments d'encliquetage (5) sont réalisés en forme de L avec une nervure transversale (11) et une nervure verticale (12) agencée en angle au niveau de celle-ci et sont agencés avec leur nervure transversale (11) au niveau d'un logement rotatif (10) pour la réception de pivots des bras de préhension (20) pivotants, dans lequel la nervure verticale (12) s'étend en direction d'une zone de tête (13) du logement de rotation (10) et est orientée avec sa partie de tête (14) en direction de la zone de tête (13) du logement rotatif (10).

2. Dispositif selon la revendication 1, **caractérisé en ce que** la nervure verticale (12) agencée en angle par rapport à sa nervure transversale (11) de l'élément d'encliquetage (5) est orientée s'étendant en biais avec sa partie de tête (14) en direction de la zone de tête (13) du logement rotatif (10).

3. Dispositif selon l'une des revendications précédentes 1 ou 2, **caractérisé en ce que** l'élément d'encliquetage (5) présente sur sa partie de tête (14) des porte-à-faux (15), dans lequel les porte-à-faux (15) dépassent latéralement de la nervure verticale (12) de l'élément d'encliquetage (5).

4. Dispositif de transport sous la forme d'un transporteur ou d'une machine de traitement de récipient, telle qu'une machine de remplissage, une rinceuse ou similaires, **caractérisé en ce que** celui-ci présente une pluralité de dispositifs pour la préhension et le maintien de récipients (1) selon l'une des revendications 1 à 3, et dans lequel ces éléments d'encliquetage antagoniste (6) présentent, dans lesquels les éléments d'encliquetage (5) du corps porteur (4) sont encliquetables, en particulier deux éléments d'encliquetage antagoniste (6) par dispositif de préhension et de maintien (1) du corps porteur (4), **caractérisé en ce que** les éléments d'encliquetage antagoniste (6) sont réalisés comme ouvertures d'encliquetage, au travers desquelles les zones de tête (13, 14) des nervures verticales (12) peuvent être passées et y être encliquetées.

5. Dispositif de transport selon la revendication 4, **caractérisé en ce que** les éléments d'encliquetage antagoniste (6) présentent deux ouvertures partielles (16, 17) passant l'une dans l'autre, réalisées différemment dans leur largeur, dans lequel une première ouverture partielle (16) plus grande est adaptée à une largeur d'une partie de tête (14) avec ses porte-à-faux (15) de l'élément d'encliquetage (5), dans lequel la seconde ouverture partielle (17) plus étroite est adaptée à une largeur d'une nervure verticale (12) de l'élément d'encliquetage (5).

6. Dispositif de transport selon l'une des revendications 4 et 5, **caractérisé en ce que** les éléments d'encliquetage antagoniste (6) réalisés comme ouvertures d'encliquetage présentent au moins deux zones partielles (16, 17), à savoir une première zone partielle plus grande (16) au travers de laquelle la zone de tête (13, 14) de la nervure verticale (12) peut être passée, et une seconde zone partielle (17) plus petite, dans laquelle la nervure verticale (12) peut être déplacée dans sa position d'installation et dans lequel les zones de tête (13, 14) de la nervure verticale (12) peuvent être placées dans la zone de bord de la zone partielle plus petite (17), et ce sur le côté opposé à la surface d'appui du corps porteur (4) de l'élément de transport (3).

7. Dispositif de transport selon l'une des revendications 4 à 6, **caractérisé en ce que** les éléments d'encliquetage antagoniste (6) sont agencés sur l'élément de transport (3) de manière symétrique les uns aux autres.

8. Dispositif de transport selon l'une des revendications 4 à 7, **caractérisé en ce que** l'élément de transport (3) est réalisé comme élément de segment de cercle.

9. Dispositif de transport selon l'une des revendications 4 à 7, **caractérisé en ce que** l'élément de transport (3) est réalisé comme élément de disque.

10. Dispositif de transport selon l'une des revendications 4 à 9, **caractérisé en ce qu'**une paroi avant (19) de l'élément d'encliquetage antagoniste (6) se trouve à distance et l'élément d'encliquetage antagoniste est dimensionné de telle manière que la nervure verticale (12) en direction de la force de flexion dans la position d'installation ne bute pas contre la paroi avant (19).

11. Dispositif de transport selon la revendication 10, **caractérisé en ce que** la paroi avant (19) de deux éléments d'encliquetage antagoniste (6) opposés est dimensionnée et/ou espacée de telle manière qu'au moins une nervure verticale (12) en direction de la force de flexion dans la position d'installation ne bute pas contre la paroi avant associée (19).
